# EUROPEAN PATENT APPLICATION

(11) **EP 4 016 340 A1**
(43) Date of publication of application: **22.06.2022**
(21) Application number: 20214667.6
(22) Date of filing: 16.12.2020
(51) Int. Cl.: G06F 21/32, G06K 9/00, G06K 9/46

(54) **FACIAL AUTHENTICATION ANTI-SPOOFING WITH ULTRASOUND PRODUCED HAIR MOVEMENTS DETECTION**

(71) Applicant: Vestel Elektronik Sanayi ve Ticaret A.S., 45030 Manisa (TR)
(72) Inventor: ASLAN, Muhammet, 45030 Manisa (TR); ZENGIN, Özlem Özden, 45030 Manisa (TR)
(74) Representative: Kehl, Ascherl, Liebhoff & Ettmayr Patentanwälte Partnerschaft mbB

(57) **Abstract**

The present invention provides a detection system (100, 200, 300) for detecting realness of a face (150, 250), comprising a sound actuator (102, 202) configured to controllably emit sound waves (103, 203), an image recording sensor (105, 205) configured to controllably record images and provide respective image data (106, 206, 306), and a processor (101, 201, 301) that is coupled to the sound actuator (102, 202) and to the image recording sensor (105, 205), wherein the processor (101, 201, 301) is configured to control the sound actuator (102, 202) to emit sound waves (103, 203) and to control the image recording sensor (105, 205) to record images of the face (150, 250) and to provide respective image data (106, 206, 306) to the processor (101, 201, 301), wherein the processor (101, 201, 301) is further configured to detect in the recorded image data (106, 206, 306) for predefined regions of the face (150, 250) vibrations caused by the emitted sound waves (103, 203) and to output a respective realness signal (107, 207, 307).

## Description

### TECHNICAL FIELD

The invention relates to a detection system, an access control system, an electronic device and a detection method.

### BACKGROUND

Although applicable to any unlocking system, the present invention will mainly be described in conjunction with unlocking of electronic devices, like e.g. smartphone, tablet PCs or the like.

Many applications exist, where access may be restricted for different reasons. For example, access to a building may be restricted or access to computers or other electronic devices may be restricted.

There exist different methods of restricting access or unlocking access. For example, passwords or numerical pins may be used. Other unlocking mechanisms may rely on biometrical features of the users, like e.g. fingerprints. Face recognition may also be used for unlocking access.

Especially biometry-based access control systems may be fooled into granting access with falsified or forged biometrical features, like e.g. falsified or forged fingerprints or images of faces.

Accordingly, there is a need for improving unlocking operations.

### SUMMARY OF THE INVENTION

The above stated problem is solved by the features of the independent claims. It is understood, that independent claims of a claim category may be formed in analogy to the dependent claims of another claim category.

It may be desired in different applications to restrict user access, e.g. to a property, to a specific room or to an electronic device, like a mobile phone,

Accordingly, it is provided:
A detection system, especially for electronic devices, for detecting realness of a face, comprising a sound actuator configured to controllably emit sound waves, an image recording sensor configured to controllably record images and provide respective image data, and a processor that is coupled to the sound actuator and to the image recording sensor, wherein the processor is configured to control the sound actuator to emit sound waves and to control the image recording sensor to record images of the face and to provide respective image data to the processor, and wherein the processor is further configured to detect in the recorded image data for predefined regions of the face vibrations caused by the emitted sound waves and to output a respective realness signal.

Further, it is provided:
An access control system for granting access to a user, the access control system comprising a detection system according to any one of the preceding claims, and an access control processor configured to receive the realness signal from the detection system and to verify if access is granted to a user only if the detection system provides a positive realness signal.

Further, it is provided:
An electronic device comprising a camera and a speaker, an access control system according to the present invention, and a detection system according to the present invention, wherein the camera is coupled to the detection system and is configured to serve as the image recording sensor of the detection system, wherein the speaker is coupled to the detection system and is configured to serve as the sound actuator of the detection system, and wherein the detection system provides the realness signal to the access control system.

Further, it is provided:
A detection method, especially for electronic devices, for detecting realness of a face, comprising emitting sound waves, recording images of the face, while the sound waves are emitted, detecting in the recorded images for predefined regions of the face vibrations caused by the emitted sound waves, and outputting a realness signal based on the detected vibrations.

The present invention is based on the finding that camera-based access control systems may easily be tricked into granting access if no additional precautionary measures are provided. For example, a face recognition system may be tricked into believing the correct person is standing in front of the camera with a picture.

The present invention therefore provides a detection system that serves for detecting if a face shown to an image recording sensor is a real face or fake, e.g. only an image of the face printed on paper.

The detection system makes use of the fact that specific regions of a human face may be excited to vibrate by sound waves that act on the specific regions. Regions that are especially susceptible to such sound waves may include, but not necessarily are limited to, eyelashes, eyebrows, hair, beards and moustaches.

The detection system comprises a sound actuator. The sound actuator is capable of generating and emitting sound waves. Such a sound actuator may e.g. be a speaker. The generated sound waves are emitted and hit the face or the printed image of a face, in case somebody tries to trick the respective access control system.

If a real face is presented to the detection system, the sound waves hit hairs of e.g., the main hair, eyebrows, eyelashes, beard or moustaches. The sound waves will therefore initiate the hairs to vibrate with the frequency of the sound waves.

The image recording sensor at the same time will record an image of the face and provide respective image data to the processor for further analysis. The processor analyzes the image data and identifies vibrations caused by the emitted sound waves in the recorded image data.

It is understood, that the predefined areas in the image data that are analyzed by the processor may be statically defined. For example, an overlay image may be shown to a user on a screen and the user may be asked to position his face in the or according to the overlay image. The predetermined statically defined regions may then be specific regions where according to the overlay the hair, eyebrows, eyelashes, a moustache or beard is positioned.

It is understood, that as alternative the predetermined regions may e.g. be identified in the image data by an image recognition system or algorithm that is trained or configured to identify regions with hair e.g., the above listed, in the image data.

If the processor identifies vibrations of hair of the face or head in the image data, the processor will output a respective positive realness signal indicating that a real face is presented to the detection system.

If instead, a paper print of a face is presented to the detection system, no vibrations according to the emitted sound waves will be present in the hair-carrying regions of the recorded image data. In that case, the processor may output a negative realness signal, indicating that no real image is presented to the detection system.

The realness signal may then be used by e.g., an access control system to grant or deny access to a user. For example, if the realness signal positively indicates that a real face is presented to the detection system and therefore to the access control system, the access control system may perform a respective face recognition and grant access if the recognized face is cleared for access. In contrast, with a negative realness signal, the access control signal may deny access. It is also possible for an access control system, that receives a negative realness signal, to output an alarm signal like e.g., an audible alarm signal or a silent alarm signal or both.

With the detection system it is easily possible to determine whether a face presented to the detection system and a corresponding access control system is real or not. Consequently, the level of security provided by the access control system may be significantly improved.

It is understood, that an electronic device with a detection system according to the present invention e.g., a smartphone or a tablet PC or a door intercom system, may comprise a front camera that may record images of a user in front of the electronic device. Further, such a device may also comprise speakers that may emit sound waves.

Therefore, the sound actuator may be implemented as the speaker of the electronic device and the image recording sensor may be implemented by the camera of the electronic device.

It is understood, that the processor of the detection system may be implemented as a dedicated hardware device e.g., a processing unit, controller, FPPA, CPLD or the like. In addition, such a dedicated hardware device may comprise or be coupled to a memory that comprises respective computer readable instructions that when executed by the dedicated hardware device cause the dedicated hardware device to perform the functions of the processor. As alternative, the processor may be implemented at least in part in a hardware device that is already present in the access control system or the electronic device. If such a hardware device is already present, the functions of the processor may be provided as additional functions or modules in a firmware or the program that is run on that hardware device.

For example, in a smartphone the detection system may be implemented as module or function comprising computer readable instructions that provide the required functionality, since all other elements, like the sound actuator and the image recording sensor as well as a processing unit capable of performing the respective tasks are usually all provided in a smartphone. The same applies e.g. to a tablet PC or to face recognition systems with intercom capabilities. In such devices or systems, the detection unit may therefore easily be implemented without large efforts for developing new hardware or the like.

Further embodiments of the present invention are subject of the further dependent claims and of the following description, referring to the drawings.

In an embodiment, the processor may be configured to detect vibrations by identifying changes in the brightness of pixels in the predetermined regions and/or by identifying changes in the color of pixels in the predetermined regions.

Unless the user is not trying to use the detection system in total darkness, the head and face of the user will be illuminated by a light source or by ambient light. If hairs on a human head or in a human face that is illuminated are initiated to vibrate, the orientation or position of the hairs with regard to the light source or the ambient light will change.

Such a change of the orientation or position of the hairs with regard to the light source or the ambient light will result in a change of brightness and/or color of the hairs when recorded in an image from the same position multiple times.

The processor may therefore identify vibrations in the image data by searching for or by identifying the change in brightness and/or color caused by such vibrations.

In another embodiment, the processor may be configured to control the sound actuator to emit sound waves with a frequency between 10 Hz and 30 kHz, especially with a frequency between 1 kHz and 25 kHz, or between 5 kHz and 25 kHz, or between 10 kHz and 25 kHz, or between 20 kHz and 25 kHz, or with a frequency of 20 kHz.

Generally, the human ear is capable of hearing sounds in the frequency range of about 20 Hz to 20 kHz. Consequently, if the frequency for the sound waves emitted by the sound actuator is set above 20 kHz, the detection system may operate transparently i.e., without the user hearing the sound waves and therefore without the user noticing that the detection system is operating.

In contrast, it may be chosen to actively inform the user about the operation of the detection system by choosing a frequency like e.g., 5 kHz or 10 kHz, that a user may hear. The user may then be asked to position his face accordingly, as indicated above, and then an audible sound may be generated. The user will notice that the detection system finished the operation when the audible sound stops.

In a further embodiment, the processor may be configured to control the sound actuator to emit sound waves with a predetermined pattern, and to detect the predetermined pattern in the predefined regions, and to output a positive realness signal if the predetermined pattern is detected in the predefined regions.

The term pattern refers to the sound waves being emitted as intermittent signal i.e., with specific phases during which the sound waves are emitted or emitted with a first frequency, and with specific phases during which the sound waves are not emitted or emitted with a second frequency.

Providing the sound waves based on a predetermined pattern allows using a sound actuator and an image recording sensor with different temporal resolutions.

Usually, the temporal resolution of the sound actuator is defined by the maximum frequency that the sound actuator is capable of reproducing or is controlled to reproduce. If for example, the sound actuator is controlled to emit sound waves with a frequency of 20 kHz, the temporal resolution of the sound actuator is 1/20 kHz = 0,05 ms.

An image recognition sensor usually is capable of recording videos with about 20 to 60 images or frames per second. In an example, where the image recognition sensor records images with 30 frames per second, the temporal resolution of the image recognition sensor is 1/30 fps = 33 ms.

By providing the sound waves in a pattern, it is possible to provide the sound waves e.g., with the first frequency, for at least as long as the temporal resolution of the image recording sensor or at least as long as the time it takes the image recording sensor to take a single picture. Then the sound waves may be emitted e.g., with the second frequency, for at least the same amount of time.

The changes in brightness and/or color of the hair in the respective region will therefore happen according to the pattern. Since the sound waves may be emitted according to the temporal resolution of the image recording sensor, the processor may accurately identify the changes by comparing single ones of the recorded images i.e., by comparing at least some of the pixels in the respective image regions.

The processor may e.g. determine the mean brightness and/or color of all the pixels in the respective region. As alternative, the processor may identify the pixels in the respective region with the largest difference in brightness and/or color and use those pixels. In another alternative, the processor may identify the pixels in the respective region with the largest difference in brightness and/or color and use a region around those pixels to calculate the mean brightness and/or color. It is understood, that the processor may calculate a single mean brightness and/or color for all selected pixels or may calculate different mean values for different pixels or groups of pixels.

In another further embodiment, the predetermined pattern may comprise on-sections, in which the sound actuator is controlled to emit sound waves, and off-sections, in which the sound actuator is controlled not to emit sound waves.

As explained above, providing the sound waves in a pattern allows adapting the change in brightness and/or color to the temporal resolution of the image recording sensor.

If instead of different frequencies, an on/off keying system is used for generating the pattern, in the off-sections or off-phases, the energy consumption is reduced as much as possible. Further, the change in brightness and/or color between the on-sections and the off-sections may be larger than between sections of a first frequency and sections of a second frequency. The detection result may therefore be more reliable with on- and off-sections.

In another embodiment, the on-sections and the off-sections may be synchronized with the image recording sensor.

As indicated above, the image recording sensor may have a lower temporal resolution than the sound actuator and the pattern may serve for modulating the emitted sound waves according to the temporal resolution of the image recording sensor.

Synchronizing in this regard may refer to the generation of the sound waves i.e., the starting of the generation of sound waves according to the pattern may be initiated at the same time as the recording of images by the image recording sensor.

In yet another embodiment, the on-sections and the off-sections may at least be as long as the recording time of the image recording sensor for recording a single image.

The duration of the on-sections and the off-sections may be at least as long as the time required by the image recording sensor to record a single image. Such a duration will assure that the effect regarding a change in brightness and/or color of hairs will be noticeable during the full recording time of a single image by the image recording sensor. It is understood, that the duration of the on-sections and the off-sections may be any time interval longer than the recording time.

However, the duration may especially be as long as a multiple of the time required by the image recording sensor to record a single image. This assures that the effect in change of brightness and/or color is present during the recording of multiple full images by the image recording sensor.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a detection system according to the present invention;
Fig. 2 shows a block diagram of an embodiment of an access control system according to the present invention;
Fig. 3 shows a block diagram of an embodiment of an electronic device according to the present invention; and
Fig. 4 shows a flow diagram of an embodiment of a detection method according to the present invention.

In the figures like reference signs denote like elements unless stated otherwise.

### DETAILED DESCRIPTION OF THE DRAWINGS

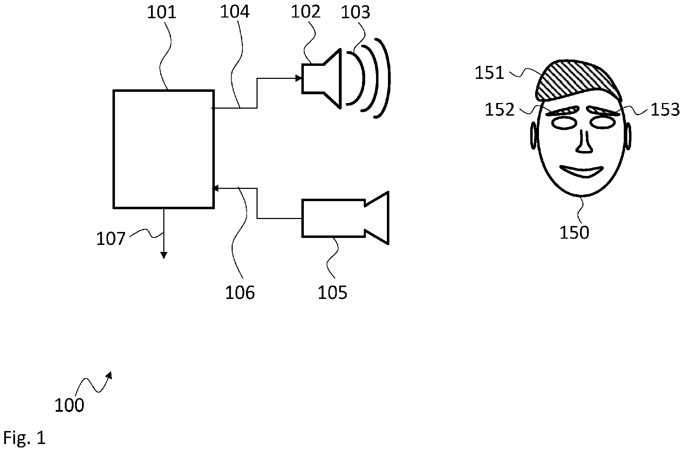

Fig. 1 shows a block diagram of a detection system 100 . The detection system 100 serves for detecting the realness of a face 150, and comprises a processor 101 that is coupled to a sound actuator 102 and an image recording sensor 105.

The processor 101 provides control signals 104 to the sound actuator 102 and causes the sound actuator 102 to emit sound waves 103. The sound waves 103 will impact on hairs of the face 150. In Fig. 1 the face 150 comprises main hair 151 and eyebrows 152, 153. It is understood, that a face may comprise more or less hair and that the hair may be individually detected for each face, e.g. by a computer vision algorithm that is trained to detect hair in/on a human face.

While the sound waves 103 impact on the hairs of the face 150, the image recording sensor 105 records images of the face 150 and provides respective image data 106 to processor 101.

Processor 101 detects in the recorded image data 106 at least for predefined regions of the face 150 vibrations caused by the emitted sound waves 103 and outputs a respective realness signal 107. It is understood, that the predefined regions may refer to the regions of the image that represent the main hair 151 and/or the eyebrows 152, 153.

It is understood, that the control signals 104 may comprise waveform signals i.e., signals that represent the respective waveforms of the emitted sound waves 103. Such control signals 104 may directly drive e.g., a speaker. As alternative, the control signals 104 may comprise a simple binary value representing on or off, or a digital command transmitted via a data bus. In such cases, the sound actuator 102 may e.g. comprise a control unit that drives a speaker and the control unit may receive the control signals 104 from the processor 101.

The processor 101 may control the sound actuator 102 to emit the sound waves 103 with a predetermined pattern. The pattern may e.g. be formed by on/off keying of the sound waves 103.

The processor 101 may then detect the predetermined pattern in the predefined regions instead of only the vibrations. A positive realness signal 107 will be provided by the processor 101 if the predetermined pattern is detected in the predefined regions.

In order to implement the on/off keying, the predetermined pattern may e.g. comprise on-sections, in which the sound actuator 102 is controlled to emit sound waves 103, and off-sections, in which the sound actuator 102 is controller not to emit sound waves 103. The on-sections and the off-sections may be at least as long as the recording time of the image recording sensor 105 for recording a single image. The on-sections and the off-may further be synchronized with the image recording sensor 105.

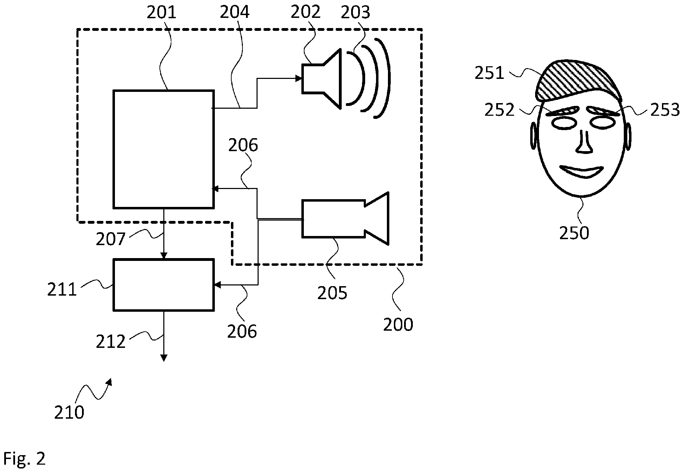

Fig. 2 shows a block diagram of an access control system 210. The access control system 210 comprises an access control processor 211 that may perform an access control process based on face-recognition to grant access to a user, and this end outputs a respective access signal 212.

The access control system 210 comprises a detection system 200 for verifying that the face 250 presented to the access control system 210 is real, prior to starting the access control process or parallel to starting the access control process.

The detection system 200 comprises a processor 201 that is coupled to a sound actuator 202 and an image recording sensor 205. The explanations above regarding detection system 100 apply accordingly to detection system 200.

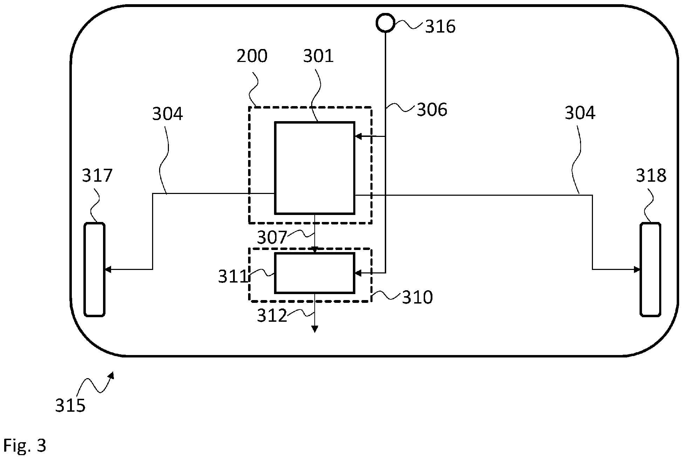

Fig. 3 shows a block diagram of an electronic device 315. The electronic device 315 may be e.g., a tablet-PC. The electronic device 315 comprises a camera 316 and speakers 317, 318. In addition, the electronic device 315 comprises an access control system 310 and a detection system 300. It is understood, that any other electrical device may be used with the detection system and the access control system, like e.g., a smartphone or a PC or a door access system.

In the electronic device 315, the camera 316 forms the image recording sensor of the detection system 300. Further, the speakers 317, 318 form the sound actuator of the detection system 300.

If a user wants to use the electronic device 315, the access control system 310 may be initiated to verify that the user is allowed to use the electronic device 315. The access control system 310 may then request detection system 300 to verify that a real user's face is presented to the camera 316. The detection system 300 will then control the speakers 317, 318 to emit sound waves and the camera to record images of the face of the user in front of the camera.

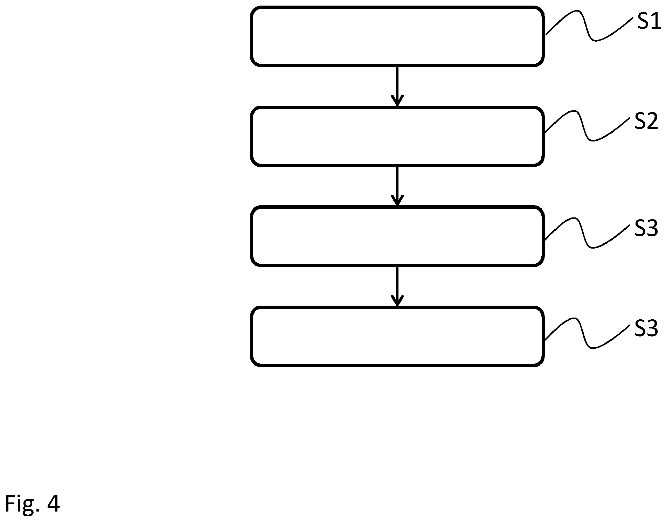

The detection system 300 will then perform the detection process as described above, especially with regard to Fig. 1, or below with regard to Fig. 4.

For sake of clarity in the following description of the method-based Fig. 4 the reference signs used above in the description of apparatus-based Figs. 1 - 3 will be maintained.

The detection method serves for detecting realness of a face 150, 250. To this end, the detection method comprises emitting S1 sound waves 103, 203, recording S2 images of the face 150, 250, while the sound waves 103, 203 are emitted, detecting S3 in the recorded images for predefined regions of the face 150, 250 vibrations caused by the emitted sound waves 103, 203, and outputting S4 a realness signal 107, 207, 307 based on the detected vibrations.

The sound waves 103, 203 may be emitted with a frequency between 30 Hz and 30 kHz, especially with a frequency between 1 kHz and 25 kHz, or between 5 kHz and 25 kHz, or between 10 kHz and 25 kHz, or between 20 kHz and 25 kHz, or with a frequency of 20 kHz. It may be chosen to use a non-audible frequency, e.g. over 20 kHz or an audible frequency below 20 kHz.

The sound waves 103, 203 may in addition or as alternative be emitted with a predetermined pattern, and the predefined regions may be analyzed for the presence of the predetermined pattern. A positive realness signal 107, 207, 307 may be output if the predetermined pattern is detected in the predefined regions.

The predetermined pattern may comprise on-sections, in which sound waves 103, 203 are emitted, and off-sections, in which the sound waves 103, 203 are not emitted. The on-sections and the off-sections may further be synchronized with the image recording sensor 105, 205. In addition, or as alternative, the on-sections and the off-sections may at least as long as the recording time of the image recording sensor 105, 205 for recording a single image.

Detecting S3 vibrations may comprise identifying changes in the brightness of pixels in the predetermined regions and/or identifying changes in the color of pixels in the predetermined regions.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### List of reference signs

- 100, 200, 300: detection system
- 101, 201, 301: processor
- 102, 202: sound actuator
- 103, 203: sound waves
- 104, 204, 304: control signal
- 105, 205: image recording sensor
- 106, 206, 306: image data
- 107, 207, 307: realness signal

- 210, 310: access control system
- 211, 311: access control processor
- 212,312: access signal

- 315: electronic device
- 316: camera
- 317,318: speaker

- 150,250: face
- 151, 251: main hair
- 152, 153, 252, 253: eyebrow

- S1, S2, S3, S4: method step

## Claims

1. Detection system (100, 200, 300) for detecting realness of a face (150, 250), comprising:
a sound actuator (102, 202) configured to controllably emit sound waves (103, 203),
an image recording sensor (105, 205) configured to controllably record images and provide respective image data (106, 206, 306),
a processor (101, 201, 301) that is coupled to the sound actuator (102, 202) and to the image recording sensor (105, 205),
wherein the processor (101, 201, 301) is configured to control the sound actuator (102, 202) to emit sound waves (103, 203) and to control the image recording sensor (105, 205) to record images of the face (150, 250) and to provide respective image data (106, 206, 306) to the processor (101, 201, 301),
wherein the processor (101, 201, 301) is further configured to detect in the recorded image data (106, 206, 306) for predefined regions of the face (150, 250) vibrations caused by the emitted sound waves (103, 203) and to output a respective realness signal (107, 207, 307).

2. Detection system (100, 200, 300) according to the preceding claim, wherein the processor (101, 201, 301) is configured to detect vibrations by identifying changes in the brightness of pixels in the predetermined regions and/or by identifying changes in the color of pixels in the predetermined regions.

3. Detection system (100, 200, 300) according to any one of the preceding claims, wherein the processor (101, 201, 301) is configured to control the sound actuator (102, 202) to emit sound waves (103, 203) with a frequency between 10 Hz and 30 kHz, especially with a frequency between 1 kHz and 25 kHz, or between 5 kHz and 25 kHz, or between 10 kHz and 25 kHz, or between 20 kHz and 25 kHz, or with a frequency of 20 kHz.

4. Detection system (100, 200, 300) according to any one of the preceding claims, wherein the processor (101, 201, 301) is configured to control the sound actuator (102, 202) to emit sound waves (103, 203) with a predetermined pattern, and to detect the predetermined pattern in the predefined regions, and to output a positive realness signal (107, 207, 307) if the predetermined pattern is detected in the predefined regions.

5. Detection system (100, 200, 300) according to the preceding claim, wherein the predetermined pattern comprises on-sections, in which the sound actuator (102, 202) is controlled to emit sound waves (103, 203), and off-sections, in which the sound actuator (102, 202) is controller not to emit sound waves (103, 203).

6. Detection system (100, 200, 300) according to the preceding claim, wherein the on-sections and the off-sections are synchronized with the image recording sensor (105, 205).

7. Detection system (100, 200, 300) according to any one of the preceding claims 5 and 6, wherein the on-sections and the off-sections are at least as long as the recording time of the image recording sensor (105, 205) for recording a single image.

8. Access control system (210, 310) for granting access to a user, the access control system (210, 310) comprising:
a detection system (100, 200, 300) according to any one of the preceding claims, and
an access control processor (211, 311) configured to receive the realness signal (107, 207, 307) from the detection system (100, 200, 300) and to verify if access is granted to a user only if the detection system (100, 200, 300) provides a positive realness signal (107, 207, 307).

9. Electronic device (315) comprising:
a camera (316) and a speaker (317, 318),
an access control system (210, 310) according to the preceding claim, and
a detection system (100, 200, 300) according to the preceding claims 1 to 7,
wherein the camera (316) is coupled to the detection system (100, 200, 300) and is configured to serve as the image recording sensor (105, 205) of the detection system (100, 200, 300),
wherein the speaker (317, 318) is coupled to the detection system (100, 200, 300) and is configured to serve as the sound actuator (102, 202) of the detection system (100, 200, 300), and
wherein the detection system (100, 200, 300) provides the realness signal (107, 207, 307) to the access control system (210, 310).

10. Detection method for detecting realness of a face (150, 250), comprising:
emitting (S1) sound waves (103, 203),
recording (S2) images of the face (150, 250), while the sound waves (103, 203) are emitted,
detecting (S3) in the recorded images for predefined regions of the face (150, 250) vibrations caused by the emitted sound waves (103, 203), and
outputting (S4) a realness signal (107, 207, 307) based on the detected vibrations.

11. Detection method according to the preceding claim, wherein detecting vibrations comprises identifying changes in the brightness of pixels in the predetermined regions and/or identifying changes in the color of pixels in the predetermined regions.

12. Detection method according to any one of the preceding method-based claims, wherein the sound waves (103, 203) are emitted with a frequency between 30 Hz and 30 kHz, especially with a frequency between 1 kHz and 25 kHz, or between 5 kHz and 25 kHz, or between 10 kHz and 25 kHz, or between 20 kHz and 25 kHz, or with a frequency of 20 kHz.

13. Detection method according to any one of the preceding method-based claims, wherein the sound waves (103, 203) are emitted with a predetermined pattern, and wherein the predefined regions are analyzed for the presence of the predetermined pattern, and a positive realness signal (107, 207, 307) is output if the predetermined pattern is detected in the predefined regions.

14. Detection method according to the preceding claim, wherein the predetermined pattern comprises on-sections, in which sound waves (103, 203) are emitted, and off-sections, in which the sound waves (103, 203) are not emitted.

15. Detection method according to the preceding claim, wherein the on-sections and the off-sections are synchronized with the image recording sensor (105, 205); and/or wherein the on-sections and the off-sections are at least as long as the recording time of the image recording sensor (105, 205) for recording a single image.
